(19) Europäisches Patentamt
European Patent Office
Office européen des brevets

(11) **EP 0 608 238 B1**

(12) **EUROPEAN PATENT SPECIFICATION**

(45) Date of publication and mention
of the grant of the patent:
**08.07.1998 Bulletin 1998/28**

(51) Int. Cl.$^6$: **B09B 1/00**

(86) International application number:
**PCT/US92/03243**

(21) Application number: **92914637.1**

(22) Date of filing: **21.04.1992**

(87) International publication number:
**WO 93/01010 (21.01.1993 Gazette 1993/03)**

(54) **ELECTRO-VAC DECONTAMINATION PROCESS**

DEKONTAMINATIONSPROZESS UNTER ANWENDUNG VON ELEKTRIZITÄT UND
VAKUUMTECHNIK

SYSTEME DE DECONTAMINATION UTILISANT L'ELECTRICITE ET L'EXTRACTION PAR LE VIDE

(84) Designated Contracting States:
**AT BE CH DE DK ES FR GB GR IT LI LU MC NL
SE**

(30) Priority: **05.07.1991 US 726201**

(43) Date of publication of application:
**03.08.1994 Bulletin 1994/31**

(73) Proprietor: **MALOT, James J.
San Juan, Puerto Rico 00903 (US)**

(72) Inventor: **MALOT, James J.
San Juan, Puerto Rico 00903 (US)**

(74) Representative:
**Hallybone, Huw George
CARPMAELS AND RANSFORD
43 Bloomsbury Square
London WC1A 2RA (GB)**

(56) References cited:
**US-A- 4 193 451        US-A- 4 320 801
US-A- 4 495 990        US-A- 4 670 634
US-A- 4 957 393        US-A- 4 973 811
US-A- 4 984 594        US-A- 5 011 329
US-A- 5 076 727**

**Description**

BACKGROUND OF THE INVENTION

This invention relates to a process of in-situ treatment of soils within the vadose zone of the earth which have been contaminated by non-naturally occurring liquid contaminants. The vadose zone is the unsaturated zone of the soil that is above the groundwater table and the saturated capillary fringe. The present invention imparts heat energy to the soil by inducing an electrical current through the soil while using vacuum extraction to further enhance the heat energy-induced volatilization of the contaminants and to recover the contaminants. This invention is called the electro-vac process.

Sources of soil contamination are numerous, for example, leaky underground storage tanks, industrial operations, chemical storage and process areas, chemical spills and waste disposal areas. Contaminants within the vadose zone can trickle down to the groundwater table and become long-term sources of groundwater contamination which typically last for decades. In order to protect groundwater resources and provide unrestricted use of land and groundwater, cleanup of subsurface contamination is necessary at many sites.

The process of vacuum extraction is well known in the field of subterranean environmental cleanup. (See US Patent 4,593,760, Visser and Malot, and US Patent Re 33,102, Visser and Malot.) The vacuum extraction process removes volatile organic compounds (VOC) from the vadose zone. In this process, a subsurface vacuum enhances volatilization of VoC's in the vadose zone, and the vacuum induced air flow removes these volatilized contaminants from the soils.

The vacuum extraction process typically works faster on light VOC's than on heavier VOC's. Heavier VOC's have been removed successfully by vacuum extraction, but with difficulty. These compounds are more easily volatilized, and hence are easier to remove by this process, if warmed. Similarly, light VOC's would be removed faster if the formation were heated and heat energy thereby imparted to the compounds. Therefore, substantial time and money could be saved at cleanup sites containing combinations of volatiles if the soil temperature could be raised. The prior art does not use heat to enhance vacuum extraction.

The vacuum extraction process alone, although effective, is relatively slow in low permeability soils (e.g. clay), and very wet soils, and with contaminants that are not easily volatilized. Also, natural preferential pathways for subsurface vacuum and air flow channel the vacuum and air flow to certain strata, and away from other strata. This occurs in stratified formations and impedes the overall cleanup process. For example, in alternating strata of sand and clay, the vacuum would extend further within the sand strata, but would be limited in the clay strata.

Heat for volatilization, without vacuum extraction, is known for decontamination. US Patent 4,670,634, Bridges et al., refers to a process whereby contaminated soils are heated with radio frequency (RF) electromagnetic energy, causing volatile contaminants to evaporate and rise to the surface where they are collected in a hood. However, equipment to generate the RF high energy required to penetrate subsoils to a substantial depth (i.e. more than 3m (10 feet)) are not available. An elaborate containment structure is required in this patent to prevent emissions of RF energy and/or hazardous vapors during the process. Since soil contamination most often extends more than 3m (10 feet) deep, and occasionally hundreds of feet (1m = 3.3 feet) deep, significant depth limitations exist for this technology. Further, limitations are imposed by the requirement of high energy radiation in urban areas where contamination is common. Also, according to the patent, high temperatures (greater than 200 degrees Centigrade) are required. US Patent 4,973,811, Bass, also uses heat without vacuum extraction.

Other surface heating methods such as US Patent 4,984,594 Visegar, also require high temperatures to operate. This process is further limited by thermal convection to heat the soil, limiting the depth of effectiveness of this process to less than 1m (3 feet). Here, again recovery of evaporated contaminants requires an elaborate surface structure.

U.S. Patent 4,957,393 (Buelt *et al.*) uses high voltage (100 kV to 2000 kV) electric arc heating of soils to raise soil temperatures to 100°C to 1200°C. A negative pressure may be maintained with respect to the treated region of ground by means of a hood over the ground surface being treated or hollow electrodes through which the volatilized material is withdrawn by an induced draft or vacuum source.

Other prior art is directed toward deep, saturated, confined formations containing naturally occurring hydrocarbons used for fuel. These patents relate to geologic formation heating by conducting electrical current between wells or between surface and/or subsurface electrodes. US Patent 849,524, Baker, describes a method in which electric current is passed through an underground formation by means of conductors placed in well-bores penetrating the formation.

This heats the formation and volatilises carbonaceous components such as coal, oil shale and the like, which are recovered through the wells. US Patent 4,382,469, Bell et al., describes a similar process to develop high BTU fuel gas under specific operating conditions. Both of these patents are directed to deep, naturally occurring non-volatile carbonaceous formations such as coal, oil shale and the like. They both depend on a capping geologic formation to naturally contain the volatilized material and to generate high formation back pressures (e.g. 10.5 MPa (1530 psi)) to direct the volatilized material to the recovery wells. In addition, high temperatures (in excess of 343°C (650 degrees Fahrenheit) in '524 and 124°C (255 degrees Fahrenheit) in '469) are used to produce fuel gas by pyrolysis of oil shale, tar and coal in '524, and by electrochemical reactions in '469.

Patent '469 requires that an aqueous electrolyte provide contact with the formation. Furthermore, if the formation tends to be dry, such as would be the case in the vadose zone, injection of electrolyte fluid into the formation would be required to conduct electricity and utilize the '469 and '524 teaching. Injecting fluid into the formation or having saturatec electrolyte within the formation would obviate the utility of vacuum extraction within the same vadose zone since saturated conditions are counterproductive to the vacuum process. The injected electrolyte would gravitate downward within the vadose zone and electrical continuity would thereby be provided to the water table rather than across the vadose zone as provided in this invention. US Patent 4,495,990, Titus et al., has an additional feature of a specialized anode/cathode apparatus which further emphasizes the importance of electrolyte fluids throughout the heated zone. US Patent 4,489,782, Perkins, includes lateral drains within the cathode/anode array. Thus, the prior art teaches that electrical heating within the vadose zone would not be effective or practical for removing contaminants from the vadose zone, and teaches away from this invention.

The purpose of this invention is to remove non-naturally occurring liquid contamination from the vadose zone as opposed to production of high BTU (1 BTU = 1055 J) fuel gas. In practice, most subsurface contaminants contemplated for removal are chlorinated solvents or hydrocarbons with very little BTU value, and have no value as fuel gas.

The prior art for electrical heating methods requires very high current loadings (e.g., 1000 amps) and safe levels of voltage (e.g., 100 volts or less). This combination requires a very conductive connate brine or addition of an electrolyte solution to achieve results. The vadose zone has neither of these fluids occurring naturally, and injecting fluids into the vadose zone is very difficult to control since fluids will seep downward due to gravity rather than where the current may be intended to flow. Any vadose zone fluid is almost always derived directly from rainfall which has very low dissolved solids and is nearly devoid of electrolytes. Thus, the vadose formation fluid, upon which the prior art relies for effectiveness, has none of the characteristics necessary for formation heating as taught by the prior art. By contrast, this invention relies upon the electrical properties of the formation at which the current and heating are directed, that is clay materials and their charged surfaces which absorb cations.

While prior art teaches that heated formations (to lOO°C or above) can induce volatilization through direct boiling, pyrolysis, cracking and electrochemical reactions, the present invention relies on enhanced volatilization induced by the combination of vacuum and heat energy of more modest temperatures (e.g., 5.6 to 111°C (10 to 200 degrees Fahrenheit) increases) on the low permeability or clay portions of the formation. Recovery of volatilized contaminant by the vacuum process is then more effective.

The prior art for electrical heating is used on completely different geologic conditions from the present invention. The prior art does not mention problems of heterogeneities within the geologic formations in which natural hydrocarbons are found and requires permeable formations in which to heat and remove contaminants. However, the present invention addresses geologic heterogeneities and recovery from low permeability formations such as clay.

The recovery methods of prior art in geologic formation heating rely on oil and gas field production methods. This typically requires high pressure in the formation to be maintained during the recovery process. Some prior methods require generation of gases (such as CO, $CO_2$, $CH_4$, $H_2$, and others) by chemical reactions, such as hydrolysis and pyrolysis, rather than in situ volatilization and vacuum recovery.

The present invention provides a process for removing non-naturally occurring contaminants from vadose zone soil as defined in Claim 1 of the accompanying claims.

The present invention uses a combination of vacuum extraction (to induce volatilization liquid and volatilized contaminants) and electric current (to impart heat energy in situ to contaminants and geologic strata). Raising the soil temperature and thereby imparting heat energy to the contaminants makes the vacuum extraction of the contaminants more effective. Also, heating certain geologic strata that resist vacuum air flow because they are wet, tends to speed the drying of such strata and improve the effectiveness of vacuum extraction therein. Various placement strategies for electrodes are used in this invention to accommodate site specific conditions.

In the accompanying drawings:-

Figure 1 shows a cross-section of a basic configuration of the invention installed in the ground. There is a point electrode in the well.

Figure 2 is similar to Figure 1, except that all the electrodes are placed outside the well.

Figure 3 is similar to Figure 2, except that a variation is shown where the well is completed below the original groundwater table and a pump or other device is in the bottom of the well.

Figure 4 is similar to Figure 1, except that multiple electrodes are shown around the well.

Figure 5 is similar to Figure 4, except that a more complicated electrode pattern is shown providing for vertical electrical current.

Figure 6 shows a side cross-section view of the bottom portion of a completed well.

Figure 7 shows a top sectional view of a completed well.

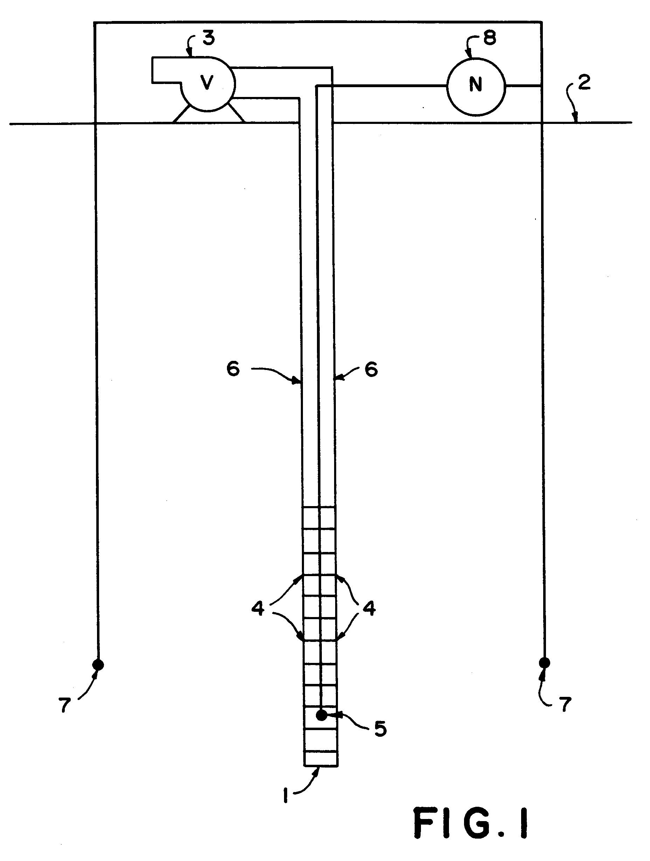

Referring to the drawings, Figure 1 illustrates one application of the process of the present invention. A borehole 1 is extended below the ground surface 2, into contaminated soil in the vadose zone and completed as a vacuum extraction well with a vacuum source 3. A suitable vacuum source is an exhaust fan, blower, or vacuum pump. The well may be completed above, below, or across the water table with perforations 4 through the casing 6 of the well. Instead of perforations 4, the well may use a well screen or simply a pipe with an open end, for the purpose of extracting liquid contaminants and volatilized contaminants from the vadose zone.

When a well bore is drilled in the ground, it is lined with a casing that is impervious to air. As part of the completion process, holes are made in the casing or the well screen is placed where It is desired for the well to be able to draw in fluids or gases. This range of holes, or completion, can be in selected geologic strata, or above, below, or across the groundwater table. In this way, specific geologic levels can be selectively focused on for treatment.

An electrode, 5 is placed into the well or the well casing itself (constructed of suitable materials) may serve as an electrode. One or more surface, near-surface or subsurface electrodes 7 are installed into the ground. Electrodes 5 and 7 are connected to electric generator 8. In an alternate embodiment a portion of the metal well screen or perforated pipe in the well can be used as an electrode instead of a separate electrode device 5.

Direct current or alternating current is passed between the electrodes. Because soil is electrically resistive, heat will be generated within the soil matrix as electric current passes between the electrodes. The resulting heat energy will enhance volatilization of volatile and semi-volatile contaminant compounds in the soil. This aids the vacuum extraction process to volatilize and recover contaminants from the subsoils at a faster rate.

The amount of current required to significantly raise the soil temperature depends on various soil characteristics, its chemical composition and the spacing of the electrodes. The temperature increase induced in the soil need not be high enough to boil the contaminants in place, since the vacuum extraction process is effective in removing high boiling point chemicals at ambient temperatures. The higher temperature caused by electrical resistance will further enhance the volatilization of contaminants for removal by vacuum extraction. Depending on the depth and soil type, it may be economic to raise the temperature electrically to actually boil some contaminants in place.

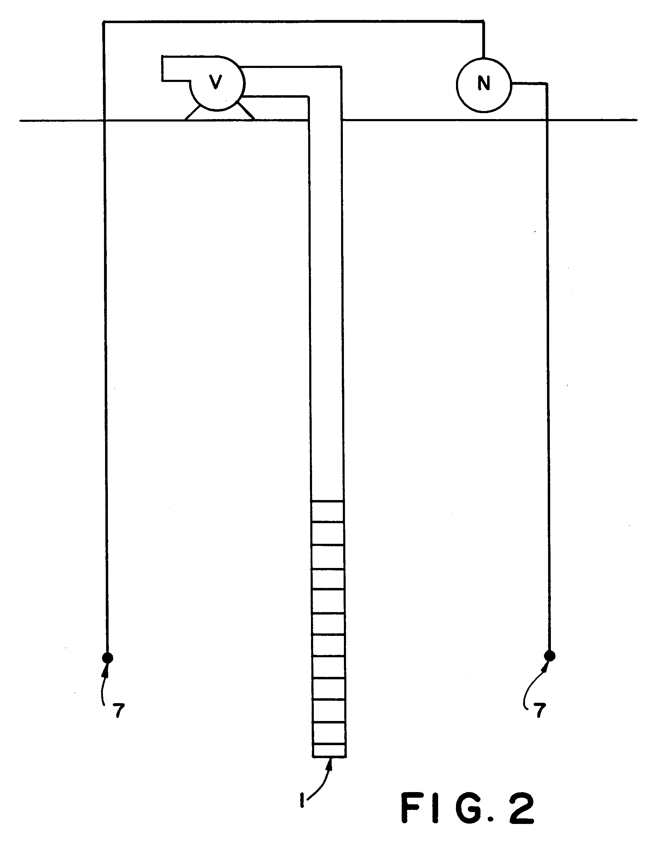

Alternatively, Figure 2 illustrates the electro-vac process where all electrodes 7 are spaced separately from the bore hole such that the electrical current passes across or around the well.

Arrays of vacuum extraction wells and electrodes can be effective in elevating soil temperature and extracting contaminants over a large area. Placement patterns of wells and electrodes are very flexible and adaptable to the specific conditions of each site. One incremental method of establishing such arrays consists first of installing one extraction well with surrounding electrodes. That well is then tested to determine the outer boundaries of its extraction zone. Then new wells are established around the boundaries of this extraction zone, with additional electrodes. This establishes an expanded combined extraction zone. The process is then reiterated with the new expanded extraction zones, until the entire contamination zone is covered.

When multiple vacuum extraction wells are used, and the extraction zones of the wells tend to overlap, neutral zones may develop at the boundaries between the extraction zones of the wells. In these neutral zones, the vacuum extraction forces from two adjoining wells tend to oppose one another. Hence, at the conclusion of the extraction process, alternate wells are turned off and on to remove contaminants from neutral areas at the boundaries between extraction zones of individual wells. This works by, in effect, relocating or eliminating the neutral zones, so that any pockets of unextracted contaminant in old neutral zones can be extracted when outside of the relocated neutral zones. Similarly, injection of air or other gases into the formation may also be used to eliminate neutral zones.

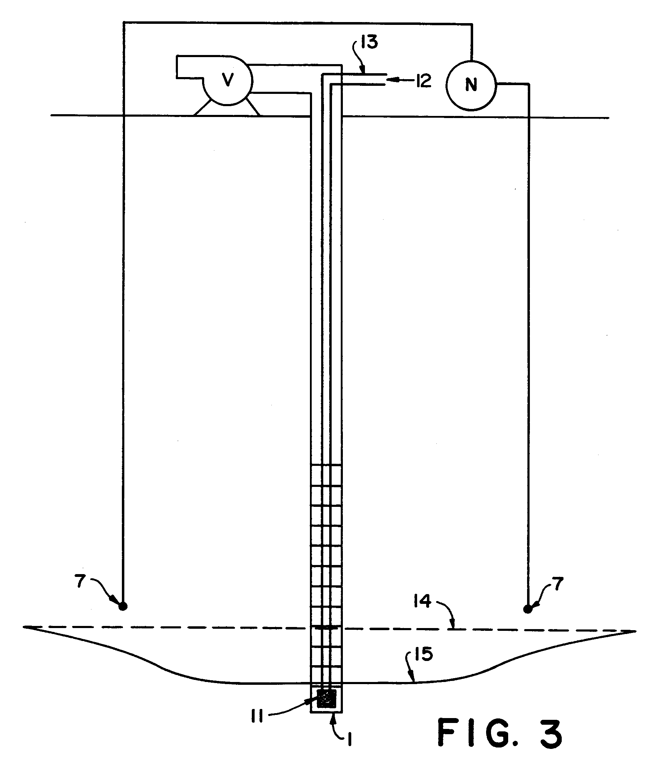

Figure 3 shows another application of the electro-vac process, in application with a dual vacuum extraction process. Pump 11 is at the bottom of bore hole 1. The pump expels water from the well out the above ground exit 12 of a water pipe 13 attached to the pump. As a result, the original groundwater table 14, is drawn down to level 15 near the well. This causes a local lowering of the groundwater table and of the saturated fringe zone, and a corresponding increase of the vadose zone. Then the present invention may be applied to the newly expanded vadose Zone. Of course, if groundwater is being pumped to the surface in this manner, then this water may be treated at the surface to remove any contaminants that it may contain, in manners that are known. In this embodiment, other fluid removal devices besides a water pump may be used, such as an air lift pump, or a suction hose.

One of the problems with the vacuum extraction process in stratified soils (layers of high permeability sand and layers of low permeability clay) is channeling of the subsurface vacuum and vapor flow. Since clay is significantly more conductive to electricity than sand, the electro-kinetic energy of the electricity will be focused in the clay layers, and because the sand is more permeable, the vacuum and air flow will be focused in the sand layers. With the electro-vac process the electrodes can be placed in the clay to heat up the clay, imparting heat energy to the contaminants and enhancing their volatilization. As the temperature rises, the clay will dewater and increase in air-filled porosity, allowing the vacuum extraction process to work more efficiently. Several other arrays of vacuum extraction wells and electrodes would be effective in producing a variety of electrical flux patterns and vacuum and vapor flow patterns to respond to various subsurface conditions.

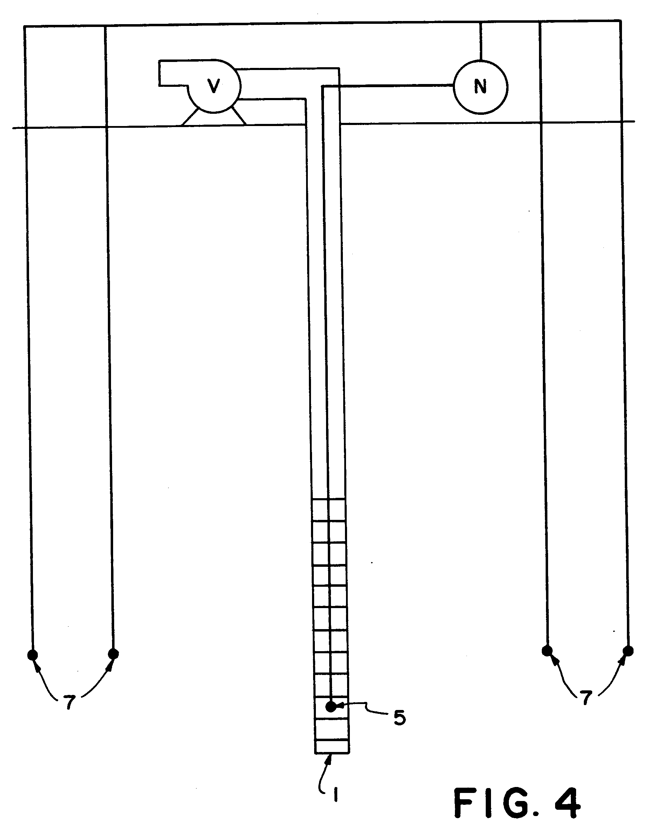

Figure 4 shows an alternative arrangement of electrodes. One electrode 5 is in well bore 1. However, an array of multiple electrodes 7 are placed around the well at various distances.

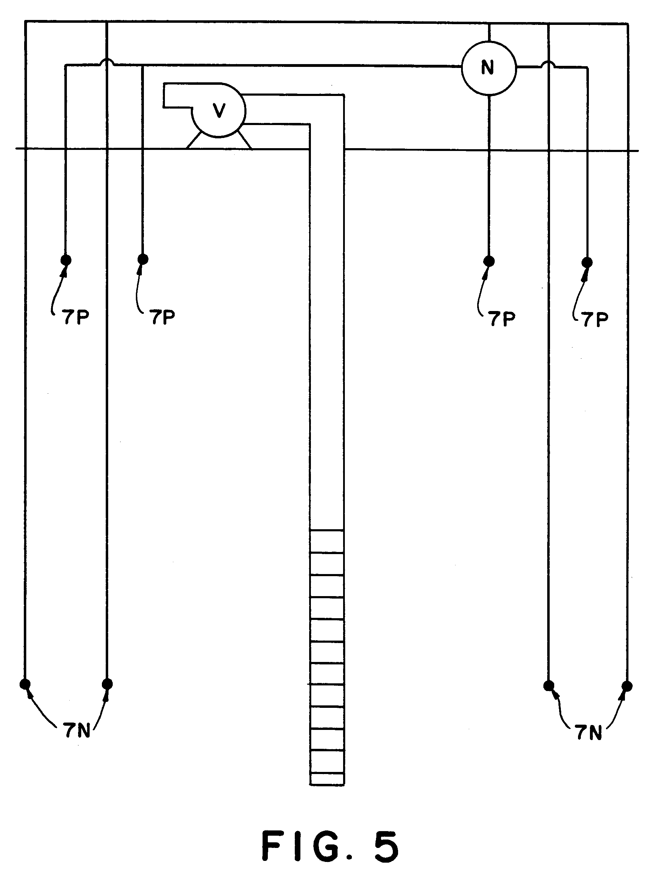

Figure 5 shows another alternative arrangement of electrodes. Multiple positive electrodes 7 P are placed above multiple negative electrodes 7 N. This provides for vertical instead of horizontal electric current. The lower level of electrodes may be installed above or below the ground water table. In another embodiment, the charge of the negative and positive electrodes could be reversed, with the negative electrodes above the positive. Or, using alternating current, the polarity would not make any difference.

Preferential flow paths caused by heterogeneities (contaminant flow around low permeability zones in the case of vacuum extraction and electrical current around low conductivity zones in the case of electrical heating) are a major problem with prior art of subsurface decontamination and are overcome by the present invention. It is common to find alternating strata of clay and sand. Clay tends to be wet and a good electric conductor, but impermeable and a block to contaminant flow. Sand tends to be a poor conductor, but permeable to contaminant flow. Hence, vacuum tends to run through sand strata and avoid clay strata. And electric flow tends to run through clay strata and avoid sand strata. By using both vacuum and electricity together, they complement each other. The electricity tends to run in the clay strata. This heats and dries out the impermeable clay strata and allows the vacuum to extract from that strata. The complementary impact of vacuum and contaminant flow initially directed away from clay and electric current flow and formation heating directed towards clay is a major improvement over prior art.

This present invention may extract contaminants both in their liquid form and after their enhanced volatilization.

The most critical aspect of combining the two technologies of electrically induced formation heating and vacuum extraction is that in the vadose zone in the layered sediments (i.e. clay and sand) typically encountered vacuum extraction is preferentially effective in relatively dry sandy soils, and electrical heating is most effective in conductive or low resistivity soils such as wet clayey soils. Similarly, vacuum extraction is most difficult to implement in wet clayey soils and electrical heating of dry sandy soils requires excessive voltage. The use of electrical heating to selectively heat clay formations, whose location and extent are rarely known accurately, preferentially heats the clay soils (where vacuum extraction is much slower to impact, impeded by the high water content of clays and low air permeability). As the electrical current heats up the clay, water and volatile or semi-volatile contaminants tend to volatilize, increasing the rate of contaminant recovery by vacuum extraction and increasing the air permeability of the clay. As this happens, the vacuum extraction process becomes more effective at recovering contaminants from the relatively low permeability clays. As vacuum extraction is preferentially effective in relatively high permeability formation, additional energy is not wasted by attempting to heat up the entire production zone or contaminated zone (as contemplated by all the previous patents). Furthermore, recovery by vacuum extraction is in situ which is much more effective at removing volatilized contamination, as opposed to allowing it to diffuse upward as taught by several patents (e.g. US Patent 4,984,594 and US Patent 4,670,634).

A basic mathematical formula describes the increase in temperature in the soil as a result of the application of electric current by this invention. The formula is:

$$\Delta T \alpha \frac{i^2 Rt}{dH}$$

where

$\Delta T$    = increase in temperature of the soil
t      = time duration of application
i      = current
R     = resistance of the soil
d     = distance between electrodes
H     = thickness of conductive strata

That is, the increase in temperature of the soil is proportional to the duration of application of electric current, the square of the amount of the electric current, and the electrical resistance of the soil. Also, the increase in temperature is inversely proportional to the distance between the electrodes and the thickness of the conductive geologic strata through which the current passes.

When contamination of the subsurface media has occurred and it is desired to remove the contaminants therefrom, the region of the subsurface media that is contaminated is delineated by techniques which are well known in the art. For example, test borings can be made at selected locations at selected depths in and around the contamination site to determine subsurface geologic conditions. The core samples taken during the test borings for determining geologic conditions, or air samples from subsurface probes, are subjected to chemical assays to delineate the extent, thickness, rate of spread and contents of the contamination in the unsaturated zone. The specification of the embodiment of the present invention to be used at a particular site depend largely on such site specific conditions and their operational and economic implications.

A wide variety of schemes exist for locating an array of multiple extraction wells that may be needed for a large contamination site. Extraction wells with their corresponding electrodes (and where applicable, air injection wells and monitoring wells) may be located in a square or triangular grid pattern before operation is begun. They may also be located by an evolutionary process that tends to automatically accommodate unknown and irregular underground factors affecting the extraction process. In this evolutionary location process, one extraction well is first installed and operated. The well is then tested to determine the outer boundaries of its extraction zone. The original well is then surrounded by a second generation of wells inside the original extraction zone, but located near or beyond the outer boundary of the extraction zone. These wells, with their own electrodes and ancillary facilities, are then operated in conjunction with the original well. This results in a new expanded combined extraction zone. This process is then reiterated over and over again with additional generations of wells, constantly expanding the perimeters of the combined extraction zone. This is continued until the combined extraction zone covers the entire contaminated area that must be treated. This type of evolutionary process is adapted to the actual extraction pattern of a particular site, and hence can result in an irregular placement of wells that accommodates actual underground heterogeneities and is adapted to the specific site. This is a more efficient and functional location of extraction wells in a multi-well context than simply laying out a large number of wells in one iteration on a predetermined grid pattern.

Variations of vacuum extraction methods, such as also using air injection wells and pump extraction of contaminated groundwater, are also used in this invention. For example, vacuum extraction techniques may be used such as air injection wells, monitoring wells, and pumping contaminated groundwater from the bore holes for surface disposal or treatment and removal of contaminants.

The present invention can be practiced with DC (direct) or AC (alternating) current. Every embodiment described herein with DC current can be operated in an obvious manner with AC current, and vice versa.

Where geologic conditions permit the present invention can be practiced on an uncompleted bore hole instead of a completed well. Where an unfinished bore hole is used, there is no metal screen or perforated pipe that may be used as an electrode, however, electrodes may be placed within the bore hole to provide electrical continuity to the formation at various depths.

When a well is made in the ground, a bore hole is drilled into the earth. When the drill is removed the unfinished bore hole remains. The bore hole will remain open until its sides collapse or cave in. To prevent this and keep the bore hole open, the bore hole is finished. To finish a bore hole, a well casing perforated pipe or well screen is installed in the length of the bore hole. The space between the bore hole wall and the screen or perforated pipe is filled with sand or gravel filter media through which liquids and gases can freely pass. All this constitutes a completed well. To assure electrical conductivity between the screen and the geologic formation, a system of metal legs, called a spider, is installed extending from the screen to the bore hole wall through the filter media. A low permeability material, for example, grout, is used to fill the remainder of the bore hole.

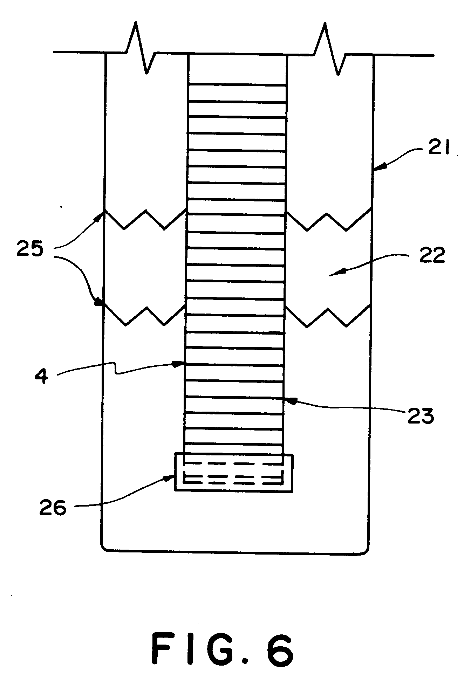

Figure 6 shows a side cross sectional view of the bottom portion of a completed well. Bore hole wall 21 is shown with screen or perforated pipe 23 installed therein. Cap 26 may be installed in the bottom of the screen or perforated pipe. A filter media 22 consisting of sand or gravel which is permeable to air and liquid is packed in the bore hole between the bore hole wall 21 and the screen or perforated pipe 23. Perforations 4 are shown in the side of the screen or perforated pipe 23 to provide access for liquid or gas into such screen or pipe. Metal spider legs 25 connect the screen or perforated pipe 23 to the geologic formation at the bore hole wall 21. This provides electrical conductivity between the geologic formation at the bore hole and such screen or pipe 23, and any electrodes that may exist therein.

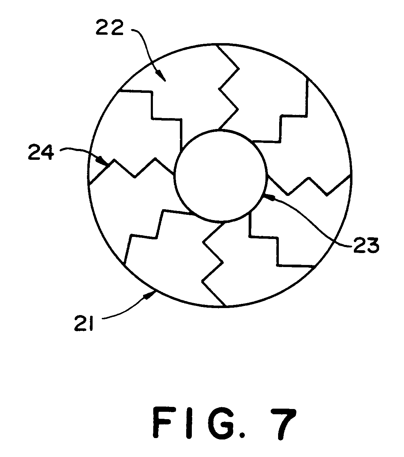

Figure 7 shows a top sectional view of the same completed well shown in Figure 6. The bore hole wall 21 is shown with a screen or perforated pipe 23 installed therein. Filter media 22 is packed into the bore hole between the bore hole wall 21 and the screen or perforated pipe 23. Metal spider legs 24 run between the bore hole wall 21 and the screen or perforated pipe 23 providing electrical conductivity between the geologic formation and the screen or perforated pipe 23 and any electrode that may be therein.

Other means of providing electrical continuity between the well or the surface and the formation are also included within the scope of the present invention. Such methods may include conductive solids or slurries in the place of the spider, cables connected to the spider, or other means.

Various amounts of electrical current can be applied in the present invention with good results. In one test, 2 to 4 amps were applied with 300 volts, for about 1 to 1.5 kilowatts. After a period of application of about one week, the soil temperature around one well reach 93.3°C (200 degrees Fahrenheit), and the rate of extraction of volatilized contaminant approximately doubled from the rate achieved with only vacuum extraction without heating. Any suitable available source of electricity on the site can be used, including the public electricity network, portable generators, batteries, or other sources.

The discharge from the vacuum source 3 is connected to any suitable system for collecting, treating, or otherwise disposing of the removed contaminants. The gas discharged from the vacuum source may be flowed through a condenser wherein water vapor and, possibly, some or all of the volatilized contaminant that is contained in the extracted matter may be condensed. The condensate and other matter may then be flowed into a storage tank, and the volatilized contaminant discharged into the ambient air through a stack. When discharge of the volatilized contaminant into the ambient air is not feasible because of environmental impacts or other reasons, the contaminant can be treated in other known ways, such as by absorption, for example by activated carbon, oxidation or other physical, chemical or biological treatment, to render the contaminant harmless. If the contaminant is a useful substance, it can be collected for future use.

Wells can be made into the vadose zone from the surface or from subsurface excavation. Likewise extraction can be made to the surface, or to a subsurface excavation.

Applying heat energy to liquid containments in the vadose zone may also make the contaminants more fluid and less viscous. This will increase their extraction rate in liquid form by vacuum extraction, in addition to enhancing their volatilization and subsequent extraction by vacuum extraction.

The prior art applied vacuum extraction to the extraction of VOC contaminants in the vadose zone. The present invention is applicable not only to VOC's, but also to semi-volatile organic compounds, and to other volatile, and semi-volatile compounds, to extract them as both liquids and after volatilization. Furthermore, an embodiment of the present invention that uses only vacuum extraction without imparting heat energy has been successfully applied to semi-volatile contaminants to extract them at ambient temperatures in both liquid and volatilized form.

A semi-volatile liquid is one with no material volatilization at normal ambient temperatures. In a test in situ of the present invention, the following semi-volatiles were extracted from the vadose zone, and they serve as an example of semi-volatiles that may be extracted: cyclohexanol, methyl-propyl benzene, l,l-oxybis benzene, cyclohexanone, cyclohexyl benzene, 1,2 dihydroacenaphthylene, methyl-ethyl benzene, camphor, trimethylcyclohexamethanol, phenylacetic acid, dichlorethyl benzene, pentachloropropane, tetramethyl benzene, l-methyl naphthalene, 3,5,5-trimethyl 2-cyclohexenone, 4-chlorophenol, phenol, 2-chlorophenol, 1,4 dichlorobenzene, benzyl alcohol, 2-methylphenol, 4-methylphenol, nitrobenzene, isophorone, 2,4 dimethylphenol, 2,4 trichlorobenze, 1,2,4 trichlorobenzene, naphthlene, hexachlorobutadiene, 2-methylnaphthalene, and 2-chloronaphthalene.

The present invention in tests has also extracted tar-like substances. The success of this endeavor is believed to be based upon the fact that tar-like substances may have one or more volatile and/or semi-volatile components and that pulling such components off leaves behind a residue that is at least more viscous and in some instances is a brittle solid, a powder or another essentially solid form. The tar-like substances may be thus stabilized in the vadose zone and prevented from reaching the water table.

The embodiments illustrated and discussed in this specification are intended only to teach those skilled in the art the best way known by the inventor to make and use this invention. Many changes could be made by those skilled in the art within the scope of the accompanying claims.

**Claims**

1. A process for removing not-naturally-occurring liquid contaminants from vadose zone soil by electrically heating the vadose zone soil, characterized in that said process comprises both:

   (a) applying a means of vacuum extraction to the contaminated zone; and
   (b) simultaneously applying electric current that is passed through the contaminated zone to provide resistive heating for raising the contaminated zone temperature above ambient but below 100°C.

2. A process according to Claim 1 where the means of vacuum extraction comprises:

   (a) installing a well (1) into the contaminated zone from the surface (2), or from a subsurface excavation,
   (b) applying a vacuum source (3) to the surface-most end of the well (1), and
   (c) operating the vacuum source (3) to volatilize the contaminant liquids and remove them in volatilized form from the contaminated zone through the well (1).

3. A process according to Claim 2, further comprising: treating or collecting the volatilized contaminant extracted through the well (1) by mechanical, physical, chemical or biological treatment to render it harmless, or by discharging it into the atmosphere.

4. A process according to Claim 2 or 3 where the means of applying the electric current comprises:

   (a) inserting one or more electrodes (5,7,7N,7P) in or around the well (1),
   (b) connecting the electrodes (5,7,7N,7P) to a source of electricity (8), and
   (c) applying electricity to the electrodes (5,7,7N,7P) in a manner to cause electric current to flow through the contaminated zone between the electrodes (5,7,7N,7P).

5. A process according to Claim 4 where the amount of electric current to be applied to achieve a desired change in temperature is selected pursuant to a mathematical relationship where the desired temperature change is proportional to the square of the electric current selected, times the resistance of the soil to electricity, times the temporal duration of the application of electricity, divided by the product of the distance between the electrodes and the thickness of the conductive strata.

6. A process according to Claim 4 or 5 where the method of inserting the electrodes comprises:

   (a) placing one or more electrodes (5) in the well (1), and
   (b) placing one or more electrodes (7) outside of the well (1) so that the flow of electric current is in or out of the well.

7. A process according to Claim 4 or 5 where the method of inserting the electrodes comprises: placing all the electrodes (7) in the soil around the well (1) such that the electric current flows around or through the well (1).

8. A process according to Claim 4 or 5 where the method of inserting the electrodes comprises: locating one or more electrodes of one polarity (7P) above one or more electrodes of the opposite polarity (7N), around the well (1), so that the flow of electric current will have a vertical component.

9. A process according to Claim 4 or 5 where the method of inserting the electrodes comprises: locating all the electrodes of one polarity lateral from the electrodes of the other polarity so that the flow of electricity will have a horizontal or diagonal component.

10. A process according to any of Claims 2 to 9, further comprising:

    (a) locating a pump (11) or other fluid removing device in the well (1),
    (b) running a conduit (13) from the pump (11) or the fluid removing device to the area above ground, and
    (c) operating the pump (11) or device in the well (1) to remove groundwater from the well (1) to the surface to draw down the groundwater table (14,15) and expand the vadose zone.

11. A process according to Claim 10 further comprising treating the removed groundwater at the surface to remove or render harmless contaminants in the groundwater.

**Patentansprüche**

1. Verfahren zum Entfernen nicht natürlich vorkommender flüssiger Kontaminanten aus vadosen Erdreichzonen durch elektrische Erwärmung der vadosen Erdreichzone, dadurch gekennzeichnet, daß das Verfahren beides umfaßt:

   (a) Anwenden einer Vakuumextraktionseinrichtung auf die kontaminierte Zone;
   (b) simultanes Zuführen eines elektrischen Stromes, der durch die kontaminierte Zone geleitet wird, um eine Widerstandserwärmung zur Anhebung der Temperatur der kontaminierten Zone über die Umgebungstemperatur, jedoch unter 100 °C zu erzielen.

2. Verfahren nach Anspruch 1, in welchem die Vakuumextraktionseinrichtung umfaßt:

   (a) die Installation eines Schachts (1) von der Oberfläche (2) oder von einer unter der Oberfläche liegenden Aushöhlung aus in die kontaminierte Zone,
   (b) das Einwirkenlassen einer Vakuumquelle (3) auf das oberflächennächste Ende des Schachts (1), und
   (c) die Inbetriebsetzung der Vakuumquelle (3) zur Verflüchtigung der kontaminierten Flüssigkeiten und deren Entfernung in verflüchtigter Form aus der kontaminierten Zone durch den Schacht (1).

3. Verfahren nach Anspruch 2, ferner umfassend: die Behandlung oder das Auffangen der durch den Schacht (1) extrahierten verflüchtigten Kontaminanten durch mechanische, physikalische, chemische oder biologische Behandlung zu deren Unschädlichmachung, oder durch deren Austrag in die Atmosphäre.

4. Verfahren nach Anspruch 2 oder 3, in welchem die Einrichtung zum Zuführen des elektrischen Stroms umfaßt:

   (a) Einführen einer oder mehrerer Elektroden (5,7,7N,7P) in oder um den Schacht (1),
   (b) Anschließen der Elektroden (5,7,7N,7P) an eine Elektrizitätsquelle (8), und
   (c) Beaufschlagen der Elektroden (5,7,7N,7P) mit Elektrizität auf eine Weise, daß ein elektrischer Stromfluß zwischen den Elektroden (5,7,7N,7P) durch die kontaminierte Zone hervorgerufen wird.

5. Verfahren nach Anspruch 4, in welchem die Stärke des zuzuführenden elektrischen Stroms zur Erzielung einer gewünschten Temperaturänderung gemäß einer mathematischen Beziehung ausgewählt wird, in der die gewünschte Temperaturänderung proportional zum Quadrat des ausgewählten elektrischen Stroms mal dem der Elektrizität entgegengesetzten Widerstand des Erdreichs, mal der zeitlichen Dauer der Beaufschlagung mit Elektrizität, dividiert durch das Produkt aus der Distanz zwischen den Elektroden und der Dicke der leitenden Schichten ist.

6. Verfahren nach Anspruch 4 oder 5, in welchem die Verfahrensmaßnahme des Einführens der Elektroden umfaßt:

   (a) Setzen einer oder mehrerer Elektroden (5) in den Schacht (1), und
   (b) Setzen einer oder mehrerer Elektroden (7) außerhalb des Schachts (1), so daß der elektrische Stromfluß in oder aus dem Schacht vorliegt.

7. Verfahren nach Anspruch 4 oder 5, in welchem die Verfahrensmaßnahme des Einführens der Elektroden umfaßt: Setzen aller Elektroden (7) in das Erdreich um den Schacht (1) derart, daß der elektrische Strom um oder durch den Schacht (1) fließt.

8. Verfahren nach Anspruch 4 oder 5, in welchem die Verfahrensmaßnahme des Einführens der Elektroden umfaßt: Setzen einer oder mehrerer Elektroden einer Polarität (7P) oberhalb einer oder mehrerer Elektroden der entgegengesetzten Polarität (7N) um den Schacht (1), derart, daß der elektrische Stromfluß eine vertikale Komponente aufweisen wird.

9. Verfahren nach Anspruch 4 oder 5, in welchem die Verfahrensmaßnahme des Einführens der Elektroden umfaßt: Positionieren sämtlicher Elektroden einer Polarität seitlich von den Elektroden der anderen Polarität derart, daß der Elektrizitätsfluß eine horizontale oder diagonale Komponente aufweisen wird.

10. Verfahren nach einem der Ansprüche 2 bis 9, ferner umfassend:

    (a) Positionieren einer Pumpe (11) oder anderen Fluid abführenden Einrichtung im Schacht (1),
    (b) Führen einer Leitung (13) von der Pumpe (11) oder der Fluid abführenden Einrichtung zum Bereich oberhalb des Erdbodens, und
    (c) Betreiben der Pumpe (11) oder der Einrichtung im Schacht (1) so, daß Grundwasser aus dem Schacht (1) an die Oberfläche gezogen wird, um den Grundwasserspiegel (14, 15) herunterzuziehen und die vadose Zone zu expandieren.

11. Verfahren nach Anspruch 10, ferner umfassend die Behandlung des abgezogenen Grundwassers an der Oberfläche zur Beseitigung oder Unschädlichmachung von Kontaminanten im Grundwasser.

**Revendications**

1. Procédé pour éliminer des substances polluantes liquides, qui n'apparaissent pas naturellement, à partir d'un sol d'une zone vadose par chauffage électrique du sol de la zone vadose, caractérisé en ce que ledit traitement comprend à la fois :

   (a) l'application de moyens d'extraction par dépression à la zone polluée; et
   (b) l'application simultanée d'un courant électrique qui est transmis par la zone polluée de manière à appliquer un chauffage par effet Joule pour accroître la température de la zone polluée pour l'amener au-dessus de la température ambiante, mais à une valeur inférieure à 100°C.

2. Procédé selon la revendication 1, selon lequel les moyens d'extraction par dépression comprennent :

   (a) l'installation d'un puits (1) dans la zone polluée à partir de la surface (2) ou à partir d'une excavation au-dessous du niveau de la surface,
   (b) l'application d'une source de dépression (3) à l'extrémité du puits (1), qui est la plus proche de la surface, et
   (c) l'actionnement de la source de dépression (3) pour volatiliser les liquides polluants et les éliminer sous forme volatilisée à partir de la zone polluée par l'intermédiaire du puits (1).

3. Procédé selon la revendication 2, comprenant en outre : le traitement ou la collecte du polluant volatilisé extrait à travers le puits (1) par traitement mécanique, physique, chimique ou biologique afin de le rendre inoffensif, ou bien en l'évacuant dans l'atmosphère.

4. Procédé selon la revendication 2 ou 3, selon lequel les moyens d'application du courant électrique comprennent :

   (a) l'insertion d'une ou de plusieurs électrodes (5,7,7N, 7P) dans ou autour du puits (1),
   (b) le raccordement des électrodes (5,7,7N,7P) à une source d'électricité (8), et

(c) l'application d'électricité aux électrodes (5,7,7N,7P) de manière à amener un courant électrique à traverser la zone polluée entre les électrodes (5,7,7N,7P).

5. Procédé selon la revendication 4, selon lequel la quantité de courant électrique devant être appliquée pour l'obtention d'un changement souhaité de température est choisie conformément à une relation mathématique, dans laquelle la variation de température désirée est proportionnelle au carré du courant électrique sélectionné, multiplié par la résistance opposée par le sol à l'électricité, multiplié par la durée d'application de l'électricité et divisé par le produit de la distance entre les électrodes par l'épaisseur des strates conductrices.

6. Procédé selon la revendication 4 ou 5, selon lequel le procédé d'insertion des électrodes comprend :

(a) la mise en place d'une ou plusieurs électrodes (5) dans le puits (1), et
(b) la mise en place d'une ou de plusieurs électrodes (7) à l'extérieur du puits (1) de sorte que le courant électrique pénètre dans le puits ou en sort.

7. Procédé selon la revendication 4 ou 5, selon lequel le procédé d'insertion des électrodes comprend : la mise en place de toutes les électrodes (7) dans le sol autour du puits (1) de telle sorte que le courant électrique circule autour du puits (1) ou traverse ce dernier.

8. Procédé selon la revendication 4 ou 5, selon lequel le procédé d'insertion des électrodes comprend : la mise en place d'une ou de plusieurs électrodes ayant une polarité (7P) au-dessus d'une ou de plusieurs électrodes ayant la polarité opposée (7N), autour du puits (1), de sorte que la circulation du courant électrique présente une composante verticale.

9. Procédé selon la revendication 4 ou 5, selon lequel le procédé d'insertion des électrodes comprend : le positionnement de l'ensemble des électrodes possédant une polarité, latéralement par rapport aux électrodes possédant l'autre polarité de sorte que la circulation de l'électricité présente une composante horizontale ou diagonale.

10. Procédé selon l'une quelconque des revendications 1 à 9, comprenant en outre :

(a) le positionnement d'une pompe (11) ou d'un autre dispositif d'enlèvement de fluide dans le puits (1),

(b) la mise en place d'un conduit (13) depuis la pompe (11) ou le dispositif de retrait du fluide jusqu'à la zone située au-dessus du sol, et

(c) l'actionnement de la pompe (11) ou du dispositif dans le puits (1) pour retirer l'eau souterraine du puits (1) pour l'amener jusqu'à la surface de manière à abaisser la nappe souterraine (14,15) et étendre la zone vadose.

11. Procédé selon la revendication 10 comprenant en outre le traitement en surface de l'eau souterraine retirée pour éliminer ou rendre inoffensif les polluants contenus dans l'eau souterraine.

**FIG. 1**

FIG. 2

FIG. 3

FIG. 4

FIG. 5

# FIG. 6

FIG. 7